# EUROPEAN PATENT APPLICATION

(11) **EP 3 527 831 A1**
(43) Date of publication of application: **21.08.2019**
(21) Application number: 17859471.9
(22) Date of filing: 12.09.2017
(51) Int. Cl.: F04D 29/30, B29C 45/44, F04D 29/28

(54) **INJECTION MOLDED IMPELLER**

(30) Priority: 12.10.2016 JP 2016200796
(71) Applicant: Enplas Corporation, Kawaguchi-shi, Saitama 332-0034 (JP)
(72) Inventor: YAMAGUCHI, Tetsuo, Kawaguchi-shi Saitama 332-0034 (JP)
(74) Representative: Prinz & Partner mbB
(86) International application number: PCT/JP2017/032805
(87) International publication number: WO 2018/070162

(57) **Abstract**

PROBLEM TO BE SOLVED: To provide an injection-molded impeller that ensures preventing burrs on surface ridgelines of vanes during injection molding and ensures reduction in a production cost required to remove the burrs on the vanes.

SOLUTION: An injection-molded impeller (1) includes a center shaft portion (3) and a plurality of vanes (5). The plurality of vanes (5) are formed at a peripheral area of the center shaft portion (3) at regular intervals. The injection-molded impeller (1) is rotated around an axial center CL of the center shaft portion (3) to flow out a fluid flowed in between the adjacent vanes (5, 5) from a direction along the axial center CL of the center shaft portion (3) toward a radially outer side. The vanes (5) include non-deflecting shape portions (10) and arc-shaped flow deflecting portions (13). The non-deflecting shape portions (10) linearly extend from the center shaft portion (3) along a radial direction. The flow deflecting portions (13) extend from the non-deflecting shape portions (10) to radially outward ends. The vanes (5) are formed in a spiral pattern from one end (7) side to another end (8) side along the axial center CL of the center shaft portion (3).

## Description

### TECHNICAL FIELD

The present invention relates to an injection-molded impeller that causes fluid flowing in along an axial direction to flow radially outward.

### BACKGROUND ART

An impeller made of resin is recently manufactured by injection molding. That is, the impeller made of resin is an injection-molded product (injection-molded impeller) formed such that a molten resin is injected into a mold cavity, and then, the molten resin injected into the mold cavity cools and hardens to be taken out from the inside of the mold cavity.

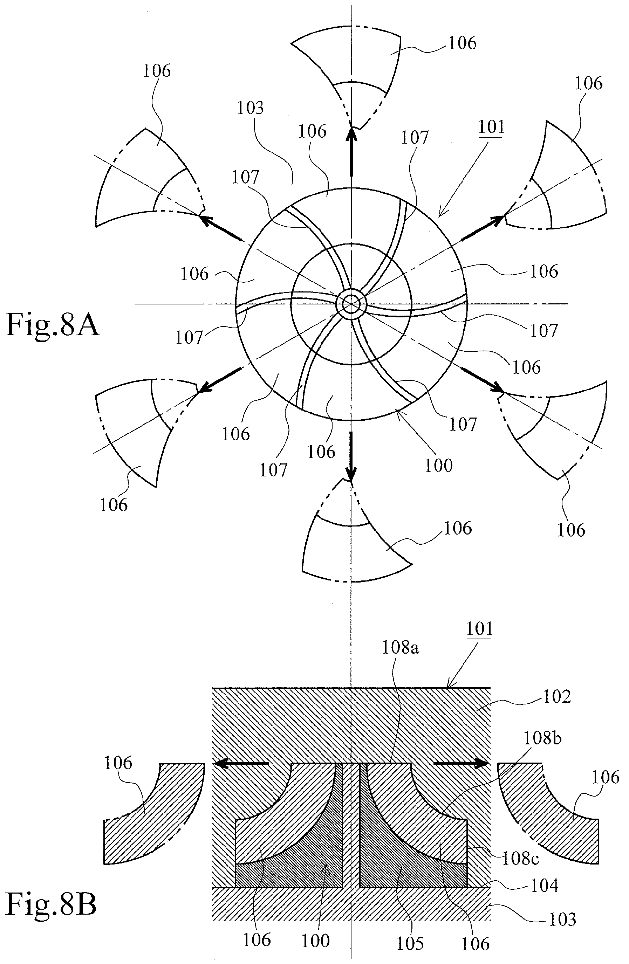

Fig. 8 includes views showing an injection molding mold 101 of an injection-molded impeller 100. Fig. 8A is a plan view of a second mold 103 shown by removing a first mold 102. Fig. 8B is a vertical cross-sectional view of the injection molding mold 101.

As shown in Fig. 8, in the injection molding mold 101 of the injection-molded impeller 100, a cavity 105 is formed on a mold mating surface 104 side of the first mold 102 and the second mold 103, a plurality of inner pieces 106 are arranged on this cavity 105 so as to slidably move, and vanes 107 are formed of the molten resin that has flowed into clearances between the respective inner pieces 106. The respective inner pieces 106 are slid and moved radially outward of the injection-molded impeller 100 after the first mold 102 separates from the second mold 103 (after mold opening). The respective inner pieces 106 are separated from the injection-molded impeller 100 to ensure the separation of the injection-molded impeller 100 and the second mold 103 (see Patent Document 1).

Patent Document 1: Japanese Unexamined Utility Model Application Publication No. 1-76525 (especially, see description on 11th to 18th lines in the fourth page)

### DISCLOSURE OF THE INVENTION

### PROBLEMS TO BE SOLVED BY THE INVENTION

However, in the injection-molded impeller 100 shown in Fig. 8, mold parting surfaces (division surfaces) 108a to 108c of the respective inner pieces 106 and the first mold 102 are positioned on surfaces of the vanes 107. Thus, burrs easily occur along surface ridgelines of the respective vanes 107. For example, in the injection-molded impeller 100 used for a centrifugal compressor, when the burr occurs on the surface ridgeline of the vane, this burr of the vane 107 interferes with flow of a fluid to decrease efficiency of the centrifugal compressor. Therefore, in the injection-molded impeller 100 shown in Fig. 8, the burrs that have occurred on the surface ridgelines of the respective vanes 107 are removed by secondary processing such as polishing processing. Thus, there is a problem that the production cost is high.

Therefore, an object of the present invention is to provide an injection-molded impeller that ensures preventing burrs on surface ridgelines of vanes during injection molding and ensures a reduction in a production cost required to remove the burrs on the vanes.

### SOLUTIONS TO THE PROBLEMS

The present invention relates to an injection-molded impeller 1 that includes a center shaft portion 3 and a plurality of vanes 5. The plurality of vanes 5 are formed at a peripheral area of the center shaft portion 3 at regular intervals. The injection-molded impeller 1 is rotated around an axial center CL of the center shaft portion 3 to flow out a fluid flowed in between the adjacent vanes 5 from a direction along the axial center CL of the center shaft portion 3 toward a radially outer side. In the present invention, the vanes 5 include non-deflecting shape portions 10 and arc-shaped flow deflecting portions 11, 13. The non-deflecting shape portions 10 linearly extend from the center shaft portion 3 along a radial direction. The flow deflecting portions 11, 13 extend from the non-deflecting shape portions 10 to radially outward ends. The vanes 5 are formed in a spiral pattern from one end 7 side to another end 8 side along the axial center CL of the center shaft portion 3.

### EFFECTS OF THE INVENTION

With the injection-molded impeller according to the present invention, the vanes are formed in the spiral pattern from the one end side to the other end side along the axial center of the center shaft portion. Therefore, only relatively moving the part (inner piece portion) of the injection molding mold in the direction along the axial center of the center shaft portion while the part (inner piece portion) of the injection molding mold is relatively turned allows separating the injection-molded impeller from the part (inner piece portion) of the injection molding mold. As a result, the injection-molded impeller according to the present invention eliminates the need for disposing the plurality of inner pieces as in the conventional example in the cavity of the injection molding mold to be slidably movable and therefore mold parting surfaces of the inner pieces and the mold as in the conventional example are not positioned on the surfaces of the vanes. This ensures preventing burrs on surface ridgelines of the vanes and ensures reduction of a production cost required to remove the burrs on the vanes.

### BRIEF DESCRIPTION OF THE DRAWINGS

Fig. 1 includes views showing an injection-molded impeller according to an embodiment of the present invention, Fig. 1A is a plan view of the injection-molded impeller, Fig. 1B is a front view of the injection-molded impeller, and Fig. 1C is a back view of the injection-molded impeller.
Fig. 2A is a cross-sectional view showing a simplified basic shape of a vane of the injection-molded impeller according to the embodiment of the present invention, Fig. 2B is a cross-sectional view showing a simplified shape of the vane of the injection-molded impeller shown in Fig. 1, and Fig. 2C is a cross-sectional view showing a simplified shape of a sub-vane of the injection-molded impeller shown in Fig. 1.
Fig. 3A is a view showing a shape of an upper end surface (an end surface on one end side along an axial center of a center shaft portion) of the vane shown in Fig. 2A, and Fig. 3B is a view (a view showing an extent of a twist of the vane) showing a positional relationship between the upper end surface of the vane shown in Fig. 2A and a lower end surface (an end surface on the other end side along the axial center of the center shaft portion).
Fig. 4 is a view (a view showing a twisted state of the vane) showing a relationship between a height position of the vane (a position in a direction along the axial center of the center shaft portion) and a position of a radially outward end of the vane.
Fig. 5A is a cross-sectional view of an injection molding mold in a first molding step of the injection-molded impeller, and Fig. 5B is a cross-sectional view of the injection molding mold in a second molding step of the injection-molded impeller.
Fig. 6A is a cross-sectional view of the injection molding mold in a third molding step of the injection-molded impeller, and Fig. 6B is a cross-sectional view of the injection molding mold showing an extracting step of the injection-molded impeller.
Fig. 7 includes views showing an impeller according to a modification of the present invention, Fig. 7A is a view showing a simplified basic shape of a vane of the impeller according to this modification, Fig. 7B is a plan view of the impeller according to this modification, and Fig. 7C is a front view of the impeller according to this modification.
Fig. 8 includes views showing an injection molding mold of a conventional injection-molded impeller, Fig. 8A is a plan view of a second mold and a plurality of inner pieces shown in the case where a first mold is removed, and Fig. 8B is a vertical cross-sectional view of the injection molding mold.

### DESCRIPTION OF PREFERRED EMBODIMENTS

An embodiment of the present invention is described in detail with reference to the drawings.

### (Impeller)

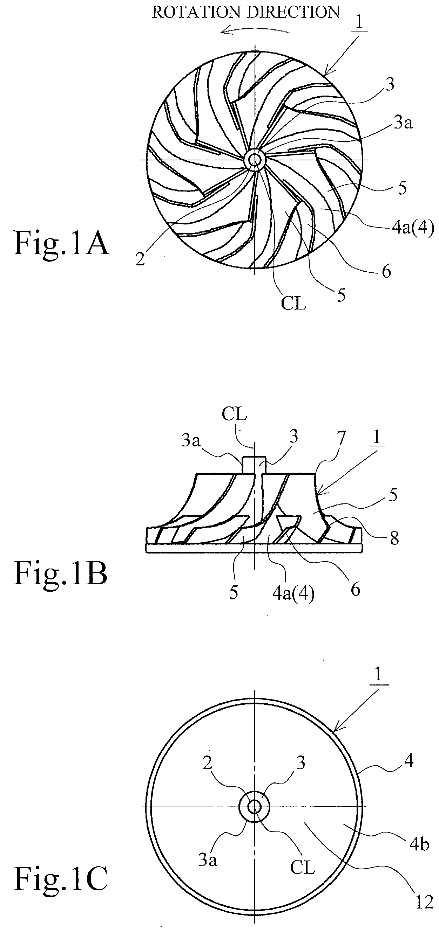

Fig. 1 includes views showing an injection-molded impeller 1 (hereinafter abbreviated as an impeller 1) according to the embodiment of the present invention. Fig. 1A is a plan view of the impeller 1. Fig. 1B is a front view of the impeller 1. Fig. 1C is a back view of the impeller 1.

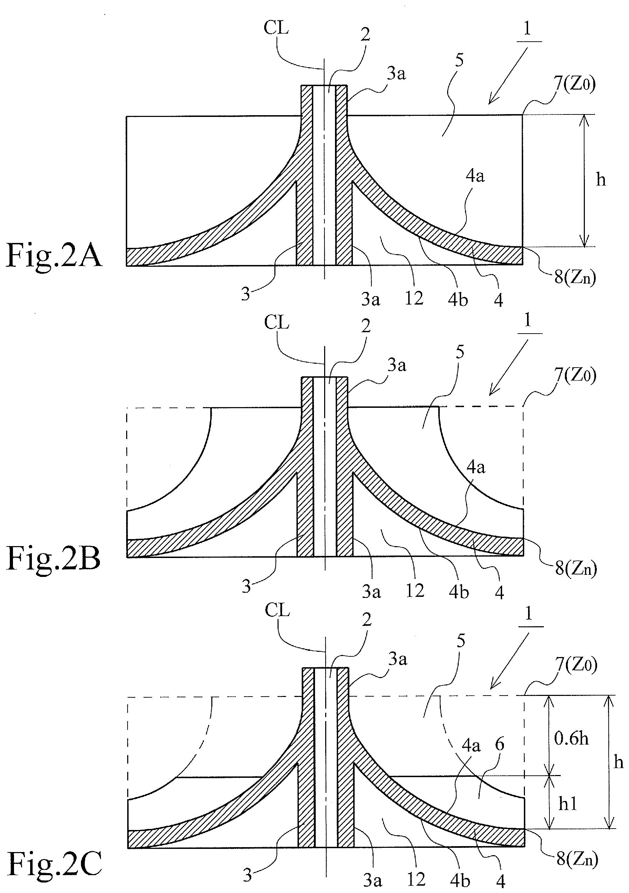

As shown in Fig. 1, the impeller 1 according to the embodiment includes a cylindrical-shaped center shaft portion 3 having a shaft hole 2, an approximately taper-shaped vane supporting portion 4, a plurality of vanes 5, and sub-vanes 6 (see Fig. 2). The vane supporting portion 4 is integrally formed with the outer peripheral side of this center shaft portion 3. The vanes 5 are formed from an outer peripheral surface 3a of the center shaft portion 3 to an outer surface 4a of the vane supporting portion 4 and formed at the peripheral area of the center shaft portion 3 so as to be positioned at regular intervals. The sub-vanes 6 are formed on the outer surface 4a of the vane supporting portion 4 between the adjacent vanes 5, 5. Such impeller 1 is injection-molded using a synthetic resin material such as PEEK containing carbon fiber and PPS containing carbon fiber.

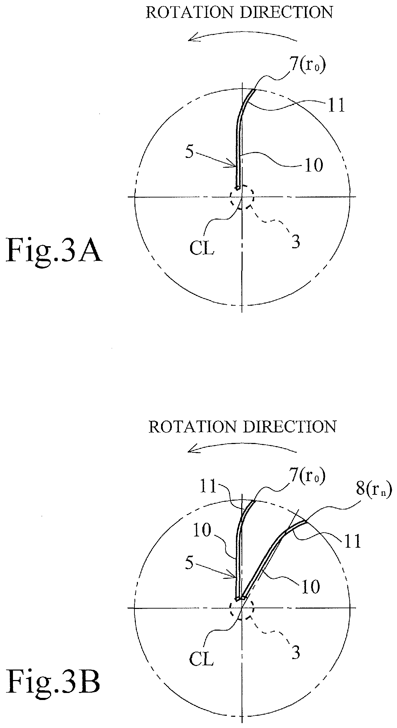

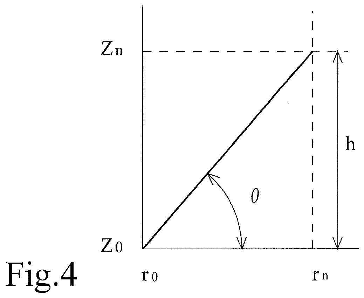

The vanes 5 are formed in a spiral pattern at constant helix angles (θ) from one end 7 side toward the other end 8 side along an axial center CL of the center shaft portion 3 (see Fig. 3 and Fig. 4). A twist direction of these vanes 5 are formed such that when the impeller 1 is rotated in an anticlockwise direction (left-handed direction) as shown in Fig. 1A, the vanes 5 are twisted in a clockwise direction (right-handed direction) from the one end 7 side toward the other end 8 side along the axial center CL of the center shaft portion 3. Fig. 4 is a view (a view showing the twisted state of the vanes 5) showing a relationship between height positions of the vanes 5 (positions Z0 to Zn in a direction along the axial center CL of the center shaft portion 3) and positions (r0 to rn) of radially outward ends of the vanes 5 that shows the vanes 5 being formed at the constant helix angles θ.

Fig. 2A and Fig. 3A are views showing a simplified basic shape of the vane 5 of the impeller 1. As shown in these views, the vane 5 is formed into a thin plate shape, extends radially outer side perpendicular to the axial center CL of the center shaft portion 3 from the outer peripheral surface 3a of the center shaft portion 3, and has the radially outward end matched with the radially outward end of the vane supporting portion 4. The vane 5 includes a non-deflecting shape portion 10 and an arc-shaped flow deflecting portion 11. The non-deflecting shape portion 10 linearly extends from a radially inward end (the outer peripheral surface 3a of the center shaft portion 3) along the radial direction (toward the radially outer side). The flow deflecting portion 11 extends from this non-deflecting shape portion 10 to the radially outward end. This flow deflecting portion 11 of the vane 5 is smoothly coupled to the non-deflecting shape portion 10 and extends so as to smoothly curve in a direction opposite to a rotation direction of the impeller 1. The radially outward end of the flow deflecting portion 11 is the radially outward end of the vane, serving as a flow-out end of fluid. In Fig. 2A, a height dimension (h) of the vane 5 of Fig. 4 is a length dimension along the axial center CL from one end Z0 of the vane 5 to the other end Zn of the vane 5 along the axial center CL of the center shaft portion 3.

Fig. 2B is a view showing a simplified shape of the vane 5 of the impeller 1 shown in Fig. 1 and is a cross-sectional view of the impeller 1. To house the impeller 1 in, for example, a case of a centrifugal compressor, the vane 5 of the impeller 1 shown in Fig. 2B has a shape where the radially outward end side and the one end 7 side along the axial center CL of the vane 5 shown in Fig. 2A is notched into an approximately a quarter elliptical shape.

Fig. 2C is a view showing a simplified shape of the sub-vane 6 of the impeller 1 shown in Fig. 1 and is a cross-sectional view of the impeller 1. The sub-vane 6 of the impeller 1 shown in Fig. 2C has a shape (a shape where the fluid flow-in side of the vane 5 is notched) where 60% of the height dimension h is notched from the one end 7 along the axial center CL of the vane 5 shown in Fig. 2B.

As shown in Fig. 1 and Fig. 2, the vane supporting portion 4 of the impeller 1 couples the plurality of vanes 5 together, shapes bottom surfaces of flow passages between the adjacent vanes 5, 5, and is a plate-shaped body formed to have a thickness dimension similar to a thickness dimension of the center shaft portion 3. The outer surface 4a of this vane supporting portion 4 has a curved surface shape so as to smoothly guide the fluid flowed in between the adjacent vanes 5, 5 from the direction along the axial center CL of the center shaft portion 3 toward the radially outer side perpendicular to the axial center CL of the center shaft portion 3. Between a back surface 4b of this vane supporting portion 4 and the outer peripheral surface 3a of the center shaft portion 3, a punching portion 12 having an approximately triangular shape in a cross-sectional shape along the axial center CL of the center shaft portion 3 is formed.

### (Injection Molding Mold)

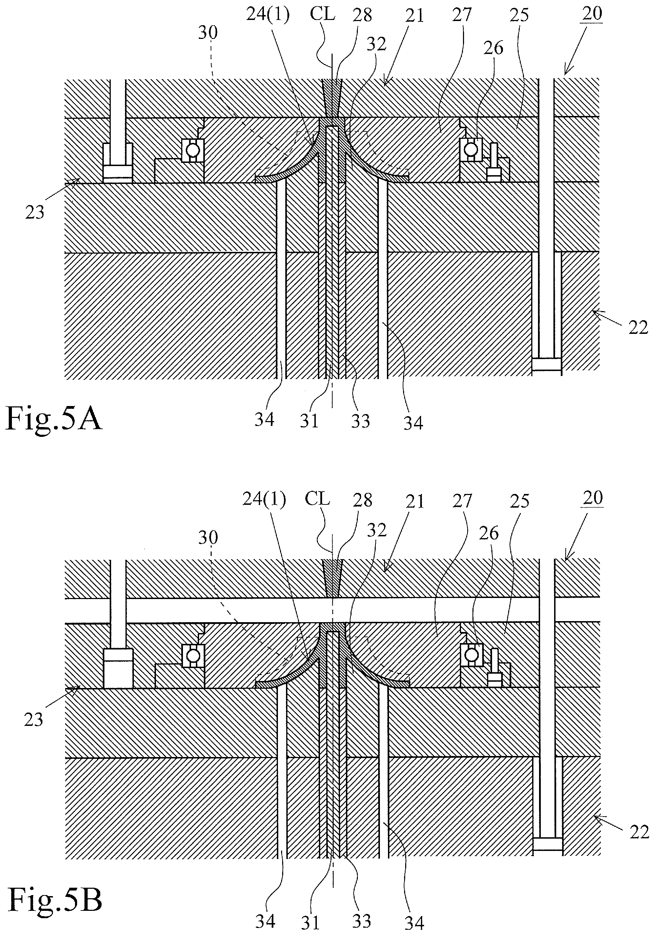

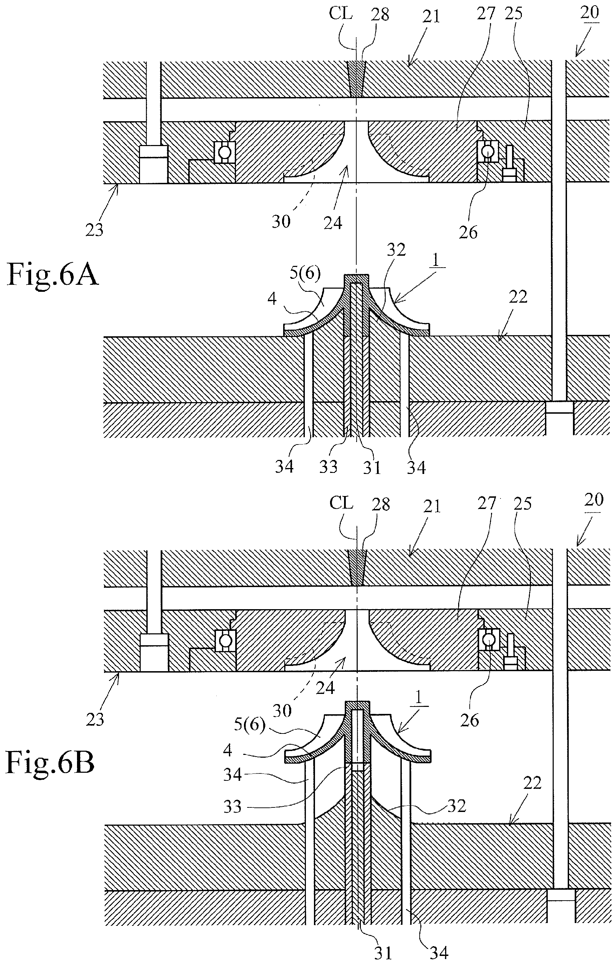

Fig. 5 and Fig. 6 are views showing an injection molding mold 20 of the impeller 1 according to the embodiment of the present invention. As shown in these views, the injection molding mold 20 includes a fixed-side mold 21, a movable-side mold 22, and a cavity piece 23 arranged between these fixed-side mold 21 and movable-side mold 22. Then, as shown in Fig. 5A, the injection molding mold 20 is configured such that an internal space of the cavity piece 23 becomes a cavity 24 to shape the impeller 1 at a time of mold clamping to sandwich the cavity piece 23 between the fixed-side mold 21 and the movable-side mold 22. The cavity piece 23 includes a support piece portion 25 and an inner piece portion 27 rotatably supported to this support piece portion 25 via a bearing 26.

### (Injection Molding Method)

The following describes the injection molding method of the impeller 1 according to the embodiment with reference to Fig. 5 and Fig. 6.

As shown in Fig. 5A, in a mold clamping state where the inner piece portion 27 of the cavity piece 23 contacts the fixed-side mold 21 and the movable-side mold 22 contacts the inner piece portion 27 of the cavity piece 23, the cavity 24 to shape the impeller 1 inside the inner piece portion 27 is formed, and molten resin is injected into this cavity 24 from a gate 28 of the fixed-side mold 21 (first molding step).

In this first molding step, the molten resin injected into the cavity 24 from the gate 28 smoothly flows from a small-diameter part side positioned on the one end 7 side along the axial center CL of the impeller 1 to a large-diameter part side positioned on the other end 8 side b along the axial center CL of the impeller 1. Therefore, the injection molding method of the impeller 1 according to the embodiment improves filling-up efficiency into the cavity 24 (especially, a part to shape the vane 5), compared with, for example, a case where the gate 28 is arranged so that the molten resin flows from the large-diameter part side positioned on the other end 8 side along the axial center CL of the impeller 1 to the small-diameter part side positioned on the one end 7 side along the axial center CL of the impeller 1. The gate 28 of the injection molding mold 20 is arranged on the small-diameter part side of the one end 7 side along the axial center CL of the impeller 1. This allows sufficiently add pressure keeping up to ends of the vane 5 and the sub-vane 6 of the large-diameter part positioned on the other end 8 side along the axial center CL of the impeller 1. As a result, the injection molding method of the impeller 1 using the injection molding mold 20 according to the embodiment ensures production of the high-accuracy impeller 1.

Next, after the molten resin injected into the cavity 24 is cooled to harden in the pressure keeping state, as shown in Fig. 5B, the cavity piece 23 and the movable-side mold 22 are integrally separated from the fixed-side mold 21 to separate the impeller 1 inside the cavity 24 (the resin hardened in the cavity 24) from the resin inside the gate 28 (second molding step). Then, the cavity piece 23 and the movable-side mold 22 integrally move from the mold clamping position in Fig. 5A to the first mold separating position in Fig. 5B.

In this second molding step, the impeller 1 made of the resin material cooled and hardened inside the cavity 24 has a contraction percentage larger than those of the metallic cavity piece 23 and movable-side mold 22, thus generating a clearance between a spiral pattern groove 30 of the inner piece portion 27 to shape the vane 5 and the sub-vane 6 and the vane 5 and the sub-vane 6. Thus, the vane supporting portion 4 fastens a shaft mold portion 31 and a truncated cone shaped portion 32 of the movable-side mold 22. In this second molding step, the vane 5 and the sub-vane 6 of the impeller 1 are formed in the spiral pattern groove 30 of the inner piece portion 27. Thus, the mold parting surfaces as in the conventional example are not positioned on the surface, thus not generating the burrs on the surface.

Next, after the cavity piece 23 has moved to the first mold separating position (the position shown in Fig. 5 B) together with the movable-side mold 22, the movable-side mold 22 separates from the cavity piece 23 to move toward the second mold separating position (the position shown in Fig. 6A). Then, the vane supporting portion 4 of the impeller 1 moves with the movable-side mold 22 in the state where the vane supporting portion 4 fastens the shaft mold portion 31 and the truncated cone shaped portion 32 of the movable-side mold 22, and the spiral pattern vanes 5 and the sub-vanes 6 of the impeller 1 slide and move inside the spiral pattern groove 30 of the inner piece portion 27 (see Fig. 5B and Fig. 6A). Thereby, the inner piece portion 27 of the cavity piece 23 is turned by the vane 5 and the sub-vane 6 of the impeller 1 that moves integrally with the movable-side mold 22, thus being separated from the impeller 1 that moves integrally with the movable-side mold 22 (third molding step).

Next, as shown in Fig. 6A, after the movable-side mold 22 has moved to the second mold separating position, the impeller 1 is pressed by an ejector sleeve 33 and an ejector pin 34 housed in the movable-side mold 22 to be separated from the movable-side mold 22, thus being taken out from the injection molding mold 20 (see Fig. 6 B).

### (Effects of Embodiment)

With the impeller 1 according to the embodiment as described above, the vanes 5 and the sub-vanes 6 are formed at the constant helix angles θ, and the spiral pattern vanes 5 and the sub-vanes 6 can slidably move in the spiral pattern groove 30 of the inner piece portion 27. Therefore, the inner piece portion 27 of the cavity piece 23 can be relatively moved in the direction along the axial center CL of the center shaft portion 3 while the inner piece portion 27 of the cavity piece 23 is relatively turned and the vane 5 and the sub-vane 6 can be smoothly separated from the inner piece portion 27 of the cavity piece 23. Consequently, with the impeller 1 according to the embodiment, the vane 5 and the sub-vane 6 can be shaped with the spiral pattern groove 30 (a part of the cavity 24) engraved into the inner piece portion 27. The inner piece portion 27 is not divided by the respective vanes 5, and a mold parting surface is not positioned on the surfaces of the vane 5 and the sub-vane 6. Therefore, the burrs do not occur on the surfaces of the vane 5 and the sub-vane 6, thereby ensuring saving the production cost required to remove the burr as a post process. In contrast to the impeller 1 according to the embodiment, in the conventional impeller 100 shown in Fig. 8, the mold parting surfaces (division surfaces) 108a to 108c of the respective inner pieces 106 and the first mold 102 are positioned on surfaces of the vanes 107. Thus, burrs easily occur along surface ridgelines of the respective vanes 107.

Additionally, the impeller 1 according to the embodiment includes the flow deflecting portion 11 where the vane 5 and the sub-vane 6 extend so as to smoothly curve in the direction opposite to the rotation direction of the impeller 1. This allows improving efficiency (efficiency of converting rotational energy into kinetic energy of the fluid) compared with that of an impeller in which the vane 5 and the sub-vane 6 are formed of only the non-deflecting shape portion 10.

### (First Modification of Impeller)

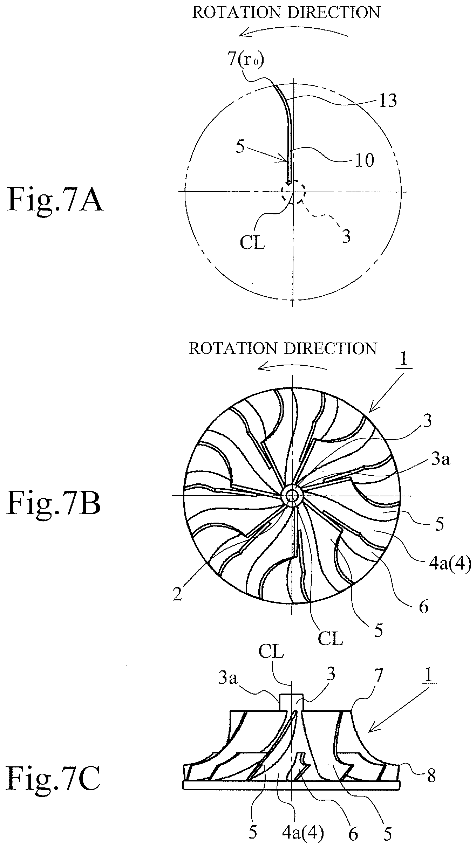

Fig. 7 includes views showing the first modification of the impeller 1 according to the embodiment. Fig. 7A is a view showing a simplified basic shape of the vane 5 of the impeller 1 according to this modification and is a view corresponding to Fig. 3A. Fig. 7B is a plan view of the impeller 1 according to this modification and is a view corresponding to Fig. 1A. Fig. 7C is a front view of the impeller 1 according to this modification and is a view corresponding to Fig. 1B. In the impeller 1 according to this modification, the identical reference numerals are attached to parts corresponding to the parts of the impeller 1 shown in Fig. 1 to omit descriptions overlapping with the impeller 1 shown in Fig. 1.

As shown in Fig. 7, the vane 5 of the impeller 1 is formed into a thin plate shape, extends radially outer side perpendicular to the axial center CL of the center shaft portion 3 from the outer peripheral surface 3a of the center shaft portion 3, and has the radially outward end matched with the radially outward end of the vane supporting portion 4. The vanes 5 are formed in the spiral pattern at the constant helix angles (θ) as shown in Fig. 4. The vane 5 includes the non-deflecting shape portion 10 and an arc-shaped flow deflecting portion 13. The non-deflecting shape portion 10 linearly extends from the radially inward end (the outer peripheral surface 3a of the center shaft portion 3) along the radial direction. The flow deflecting portion 13 extends from this non-deflecting shape portion 10 to the radially outward end. This flow deflecting portion 13 of the vane 5 is smoothly coupled to the non-deflecting shape portion 10 and extends so as to smoothly curve in the identical direction of the rotation direction of the impeller 1. The impeller 1 shown in Fig. 7B and Fig. 7C includes the vanes 5 formed as shown in Fig. 2B and the sub-vanes 6 formed as shown in Fig. 2C.

The impeller 1 according to this modification with the above-described configuration is molded by the injection molding method similar to that of the impeller 1 according to the embodiment and therefore can obtain the effects similar to the effects of the embodiment.

The impeller 1 according to this modification includes the vanes 5 and the sub-vanes 6 including the flow deflecting portions 13 that extend so as to smoothly curve in the direction identical to the rotation direction of the impeller 1. Accordingly, compared with the impeller with the vanes 5 and the sub-vanes 6 formed of only the non-deflecting shape portion 10, the impeller 1 according to this modification allows a higher output (can obtain the output higher than that of the impeller 1 according to the embodiment at a rotation speed identical to that of the impeller 1 according to the embodiment).

### (Second Modification of Impeller)

The impeller 1 according to the present invention is not limited to the impellers 1 according to the embodiment and the first modification. As long as the elastically deformed vane 5 and sub-vane 6 are slidably movable in the spiral pattern groove 30 of the inner piece portion 27 and the vane 5 and the sub-vane 6 can be smoothly separated from the inner piece portion 27 while the inner piece portion 27 is rotated, the helix angle may be changed from the one end 7 side toward the other end 8 side along the axial center CL of the center shaft portion 3.

### (Third Modification of Impeller)

The impeller 1 according to the present invention is not limited to the impellers 1 according to the embodiment and the respective modifications, and a height (h1) of the sub-vane 6 can be determined to have an optimum dimension according to the maximum diameter of the vane 5 and a required output performance.

### (Fourth Modification of Impeller)

The impeller 1 according to the present invention is not limited to the impellers 1 of the embodiment and the respective modifications. As long as the performance required for only the vane 5 can be provided, the sub-vane 6 may be omitted.

### DESCRIPTION OF REFERENCE SIGNS

- 1:: Impeller (injection-molded impeller)
- 3:: Center shaft portion
- 5:: Vane
- CL:: Axial center
- 7:: One end
- 8:: Other end
- 10:: Non-deflecting shape portion
- 11, 13:: Flow deflecting portion

## Claims

1. An injection-molded impeller comprising:
a center shaft portion; and
a plurality of vanes formed at a peripheral area of the center shaft portion at regular intervals, wherein
the injection-molded impeller is rotated around an axial center of the center shaft portion to flow out a fluid flowed in between the adjacent vanes from a direction along the axial center of the center shaft portion toward a radially outer side, and
the vanes include non-deflecting shape portions and arc-shaped flow deflecting portions, the non-deflecting shape portions linearly extend from the center shaft portion along a radial direction, the flow deflecting portions extend from the non-deflecting shape portions to radially outward ends, and the vanes are formed in a spiral pattern from one end side to another end side along the axial center of the center shaft portion.

2. The injection-molded impeller according to claim 1, wherein
the vanes are formed in the spiral pattern at constant helix angles from the one end side to the other end side along the axial center of the center shaft portion.

3. The injection-molded impeller according to claim 1 or 2, wherein
the flow deflecting portions extend so as to smoothly curve in a direction opposite to a rotation direction.

4. The injection-molded impeller according to claim 1 or 2, wherein
the flow deflecting portions extend so as to smoothly curve in a direction identical to a rotation direction.

5. The injection-molded impeller according to any one of claims 1 to 4, comprising
a vane supporting portion formed on an outer peripheral side of the center shaft portion, the vane supporting portion coupling the plurality of vanes together, the vane supporting portion shaping bottom surfaces of flow passages between the adjacent vanes;
an outer surface having a curved surface shape formed on the vane supporting portion, the outer surface smoothly guides the fluid flowed in between the adjacent vanes from the direction along the axial center of the center shaft portion toward the radially outer side perpendicular to the axial center of the center shaft portion; and
sub-vanes formed on the outer surface of the vane supporting portion and between the adjacent vanes, the sub-vanes having shapes formed by notching fluid flow-in sides of the vanes.
